# EUROPEAN PATENT SPECIFICATION

(11) **EP 2 897 299 B1**
(45) Date of publication and mention of the grant of the patent: **19.10.2016**
(21) Application number: 14305059.9
(22) Date of filing: 16.01.2014
(51) Int. Cl.: H04B 3/54, H04L 1/00, H04W 4/00, H04B 7/155

(54) **Improved communication in smart grid networks**
Verbesserte Kommunikation in einem intelligenten Gitternetz
Communication améliorée dans des réseaux électriques intelligents

(43) Date of publication of application: 22.07.2015
(73) Proprietor: ALCATEL LUCENT, 92100 Boulogne-Billancourt (FR)
(72) Inventor: Gacanin, Haris, 2018 Antwerpen (BE)
(74) Representative: ALU Antw Patent Attorneys

(56) References cited:
- EP-A1- 2 264 929
- WO-A1-2009/126079
- PHULPIN Y ET AL: "Network coding in Smart Grids", SMART GRID COMMUNICATIONS (SMARTGRIDCOMM), 2011 IEEE INTERNATIONAL CONFERENCE ON, IEEE, 17 October 2011 (2011-10-17), pages 49-54, XP032073426, DOI: 10.1109/SMARTGRIDCOMM.2011.6102374 ISBN: 978-1-4577-1704-8

## Description

### Field of Invention

The present invention pertains to the field of communication in a smart grid network, and in particular to methods for communicating between a first and a second component of a smart grid network, and to components, such as a control component, a substation component and a sensor component, for use in a smart grid network.

### Background

To support the exchanges of smart grid's sensor information and control messages, several communication technologies are available: power line communication (PLC), copper or optical fiber, and wireless communication (ad-hoc, mesh and cellular architectures). Since cable communication involves the development of a dedicated infrastructure with high capital costs, PLC and wireless communication channels are considered by many utility companies to be the most promising technologies.

Network coding (NC) had been studied in the context of distributed source coding as a promising technique to improve capacity in wired networks. Packet level NC has been introduced in smart grid to exploit the broadcast nature of the available communication channels as well as the storage capabilities of individual nodes in the network, particularly at medium voltage. By allowing intermediate nodes in the network to mix different packets through algebraic operations, network coding breaks with the ruling store-and-forward principle of traditional communication networks. However, a problem with packet level network coding in smart grid is the fact that all packets or a larger number of them have to be received prior to decoding. This may significantly increase the network latency and require more physical storage/memory in the future where smart grid and machine-to-machine (M2M) applications with an increasing number of components may start to blend. Consequently, the higher spectrum efficiency and lower latency are also critical issues in smart grid communication network.

In EP 2 264 929 a method for transmitting data using physical layer network coding is proposed whereby a first sending device transmits a first data packet to a relay device and a second sending device transmits a second data packet to a relay device. The relay then decodes a linear combination of the received data packet and transmits the decoded data to both the first and the second sending device, where the second and first data packet, respectively, are recovered.

In WO 2009/126079 a network coding based data communication is proposed which involves selecting a group of multiple source nodes in a communication system and having data destined for a destination node. A relay node network codes data from the selected group to form combined, network coded data. This resulting data is then sent towards the destination node.

### Summary

Embodiments of the invention aim to provide improved methods for communicating between a first and a second component of a smart grid network, and improved components, such as a control component, a substation component and a sensor component, for use in a smart grid network, allowing to a better device reachability and an improved spectral efficiency compared to prior art communication techniques used in smart grid networks.

According to a first aspect of the invention there is provided a method to be performed by a substation component when a first component communicates with a second component of a smart grid network. The smart grid network comprises a plurality of sensor components, a plurality of substation components, and at least one control component. The method comprises performing the following steps at a substation component of the plurality of substation components. First information that said substation component has been selected as a relay for bi-directional communication between the first and the second component of the smart grid network, is received at the substation component. Next a first message signal from the first component and a second message signal from the second component are received during a first time signaling interval. The first and second component may be any component of the plurality of sensor components, the plurality of substation components, and the least one control component. A combined signal is obtained by combining at the physical layer a first physical parameter representing said first message signal and a second physical parameter representing said second message signal. During a second time signaling interval following said first time signaling interval, the combined signal or a signal derived from the combined signal is sent by the substation to the first and the second component.

According to a second aspect of the invention, there is provided a method to be performed by a first component when the first component communicates with a second component of the smart grid network. The method comprises performing the following steps at said first component. First a substation component of said plurality of substation component is selected as a relay for bi-directional communication between the first and the second component of the smart grid network. The first and second component is any component of the plurality of sensor components, the plurality of substation components, and the least one control component. Next a first message signal is sent to the selected substation component, during a first time signaling interval. During a second time signaling interval a combined signal obtained by combining at the physical layer a first physical parameter representing the first message signal and a second physical parameter representing a second message signal (received by the substation from the second component), is received from the selected substation. The first component extracts the second message signal from the combined signal, using the first message signal which is known to the first component. The steps performed by the first component may be performed in the same way by the second component.

Embodiments of the invention are based *inter alia* on the insight that network capacity may be improved by using bi-directional flows in combination with analog network coding by combining message signals received from a first and a second component at the physical level at a substation component that has been selected as a relay between the first and the second component. Currently available smart grid draft standards (such as ITU-T G.hnem, G3-PLC, PRIME, etc.) do not foresee bi-directional solutions. Such embodiments have the advantage that the device reachability and spectral efficiency can be improved compared to current smart grid communication technologies.

In the context of the present invention the term sensor component may refer to any sensor, any metering device, or any other device capable of performing measurements, and the sensor component is further configured for sending data messages to the at least one control component, optionally via any one of the substation components. The term substation component refers to a communication device used for performing an assist communication function, also called a relay function between the sensor components and the control components. The term control component refers to a control entity located at a master node and configured for performing control tasks and for sending control messages to the sensor components, optionally via any one of the substation components. A control component has functionalities to allocate and coordinate network devices and resources of the smart grid network, and may be further configured to analyze the data messages received from the sensor components. The one or more control component(s), the substation components and the sensor components are located within the same network domain. The one or more control component(s), the substation components and the sensor components are IP enabled devices, and the exchanged packets contained in the message signals are sent via an IP protocol.

In the context of the present invention the term "time signaling interval' refers to a time interval that has been agreed between the first component, the second component and the selected substation for exchanging message signals between each other. These message signals may include e.g. control data and/or measurement data, and the included packets typically use the IP protocol.

Preferably, the obtaining of a combined signal comprises generating a superimposed signal by adding the first physical parameter to the second physical parameter. Such a generating may be achieved e.g. by synchronizing the receipt of the first and second message signal during the first time signaling interval so that the received first and second message signal are automatically superimposed at the receiving section of the substation that is selected as a relay.

In an exemplary embodiment the combined signal is stored in the substation in analogue form, e.g. n a storage means of a line driver of the substation, and the sending comprises sending the stored combined signal.

In another exemplary embodiment, the method further comprises at the substation: converting the combined signal into a digital signal; storing said digital signal; digitally processing said digital signal; and converting said digitally processed digital signal into an analogue signal. The sending may then comprise sending the analogue signal.

In exemplary embodiment, the first and the second component are a first and a second substation component of the plurality of substation components which communicate via a third (relay) substation component; such a situation may occur if the first and second substation want to exchange stored data messages, and the quality of the direct link between those substations is not good. In another exemplary embodiment the first component is a sensor component and the second component is a control component. In yet another embodiment, the first and second component is a first and second sensor component. The latter embodiment may be used by M2M application where different sensor components need to exchange data messages.

According to another aspect of the invention there is provided a substation component for use in a smart grid network. The smart grid network comprises a plurality of sensor components, a plurality of substation components, and at least one control component. The substation component is configured for receiving information that the substation component has been selected as a relay for bi-directional communication between a first and a second component of the smart grid network; for receiving during a first time signaling interval, a first message signal from the first component and a second message signal from the second component; for generating a combined signal by combining at the physical layer a first physical parameter representing the first message signal and a second physical parameter representing the second message signal; and for sending during a second time signaling interval following said first time signaling interval, of the combined signal or a signal derived from said combined signal to the first and the second component.

In an exemplary embodiment the substation comprises a line driver configured for obtaining a combined signal by adding a first physical parameter representing the first message signal and a second physical parameter representing the second message signal.

In an exemplary embodiment the substation comprises a storage means for storing the combined signal in analogue form, and a sending module configured for sending the stored combined signal. Such a storage means may be provided e.g. in a line driver of the substation.

In an exemplary embodiment the substation further comprises an analogue to digital converter (ADC) configured for converting the combined signal into a digital signal; a storage means for storing said digital signal; a digital processor configured for digitally processing said digital signal; a digital to analogue converter (DAC) for converting said digitally processed digital signal into an analogue signal; and a sending module configured for sending said analogue signal. The ADC, DAC, digital processor and the sending module may be provided e.g. in a baseband block of the substation.

According to another aspect of the invention there is provided a component for use in a smart grid network comprising a plurality of sensor components, a plurality of substation components, and at least one control component. The component may be a sensor component, a substation component or a control component. The component is configured for selecting a substation component of the plurality of substation components as a relay for bi-directional communication with another component of the smart grid network. The component and the other component may be any component of the plurality of sensor components, the plurality of substation components, and the least one control component; for sending to the selected substation component, during a first time signaling interval, of a message signal; for receiving from the selected substation component, during a second time signaling interval following said first time signaling interval, of a combined signal generated by combining at the physical layer a physical parameter representing the message signal and another physical parameter representing another message signal; and for extracting the other message signal from said combined signal, using the message signal that is known to the component and was sent to the selected substation.

According to yet another aspect of the invention there is provided a smart grid network comprising a plurality of sensor components configured according to the implementation specified above for the component; a plurality of substation components configured according to the implementation specified above for the component and according to the implementation specified above for the substation component; and at least one control component configured according to the implementation specified above for the component.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1A illustrates schematically a ICT smart grid network in which embodiments of the invention may be used;
Figure 1B illustrates schematically an embodiment of a simplified smart grid architecture;
Figures 2A, 2B, and 2C illustrate schematically a conventional message exchange, and a first and second network coding embodiment, respectively;
Figures 3, 4 and 5 illustrate schematically three variants of bi-directional communication according to embodiments;
Figure 6 is a flow chart illustrating an embodiment of the method of the invention; and
Figure 7 is a diagram illustrating in detail an exemplary embodiment of the invention.

### Description of embodiments

International Telecommunication Union (ITU) G.hnem will enable cost-effective smart grid applications such as distribution automation, advanced metering infrastructure (AMI), demand side management (DSM), grid-to-home communications, home/building energy management, home automation, vehicle-to-grid and vehicle-to-charging station communications. In the G.hnem standard different domains are available for the possible communication over different mediums (i.e., wireless, powerline cables, etc.).

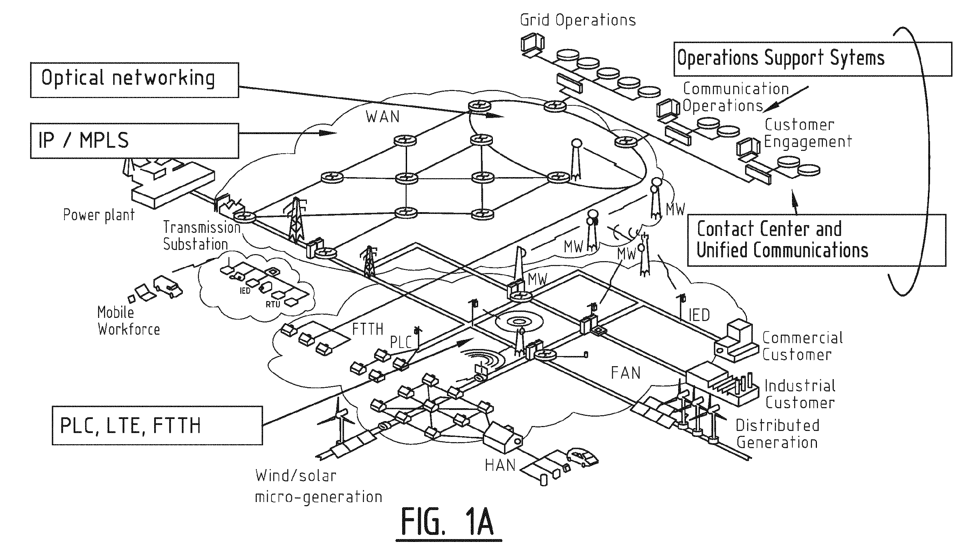

To support the exchanges of smart grid's sensor information and control messages an ICT communication network is required. Figure 1A illustrates schematically a smart grid ICT network with a single smart grid operator. The G.hnem network consists of one or more domains corresponding to different mediums. Embodiments of the invention may be applied within each domain of the entire G.hnem network. For a smart grid ICT network several communication technologies are available: power line communication (PLC), copper or optical fiber, and wireless communication (ad-hoc, mesh and cellular architectures). The core HV network is established by optical communications while MV and LV networks are having several possibilities such as wireless (LTE, GSM, Wimax), wireline (PLC) and fiber-to-the-home (FTTH). The most common solution is PLC since it is easy to exploit the existing wired infrastructure and the deployment cost is greatly reduced. In addition, protocols like Ethernet, IPv4 and IPv6, are supported in smart grid networks and enables easily integration with other IP-based networks via multi-protocol label switching (MPLS). G.hnem supports power lines as a communications medium that is under the direct and complete control of power utilities. The new standards provide the crucial link between electricity and communications networks, enabling utilities to exercise a higher level of monitoring and control of the grid.

Embodiments of the invention envisage is to enhance spectrum efficiency in smart grid ICT networks by coordinated analog network coding. Embodiments are based on the insight that packet network coding in smart grid may be complemented with analog network coding in order to improve transmission reliability and efficiency.

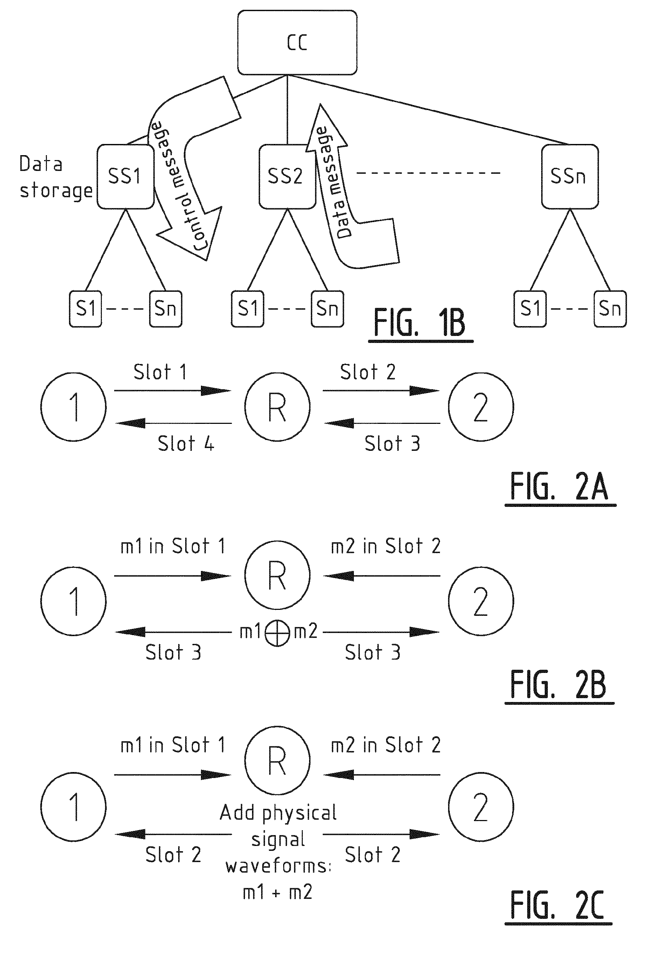

A simplified smart grid architecture with sensors (S), substations (SS) and control center (CC) is illustrated in figure 1B. The term sensor (S) is used to refer to any smart sensor component including smart meters and other types of measuring devices. The term control center (CC) refers to a central management facility which receives data from the sensors. The substations function as communication assist components. The substations may be LV, MV or HV components. Examples of a LV substation component are a power line adapter or a wifi enabled device. An example of a MV substation component is a power line adapter. An example of a HV substation is an edge/core router. Note that Fig. 1A illustrates the complexity of an embodiment of a smart grid ICT communication network. Control messages flow from the control center CC to a sensor S while data messages flow from a sensor S or a substation SS toward the control center CC. Note that CC does not have to be the last node in the communication chain. In conventional communications between two devices, the messages are exchanged within four time signaling intervals as illustrated in figure 2A. In a first slot 1, a first message is sent from a first device 1 to a relay device R, and this message is sent in a second slot 2 from the relay device R to a second device 2. In a third slot 3 the second device 2 sends a message to the relay device R, and the relay device R sends this message in a fourth slot 4 to the first device 1. An improvement may be achieved by performing network coding in smart grid as illustrated in figure 2B. More details about this technique can be found in Phluphin et al, "Network Coding in smart grids, 2011 IEEE International Conference on smart grid Communication, 17-20 October 2011.

An embodiment of the invention is illustrated in figure 2C. At the relay device R a first message m1 and a second message m2 are received in the same time signaling interval 1 from a first device 1 and a second device 2, respectively. The physical signal waveforms of the first and second message are added so that the added signal, i.e. an analog coded signal m1+m2, can be sent in the second time signaling interval 2 to the first and second devices 1 and 2. Because of the adding at the physical level m1 and m2 may be sent in the same time signaling interval 1. Such analog network coding is obtained by providing a simple coding capability at the relaying nodes, in exchange for network capacity gain. Direct application of network coding at the physical layer (Physical Network Coding, PNC) increases the capacity of bi-directional communication.

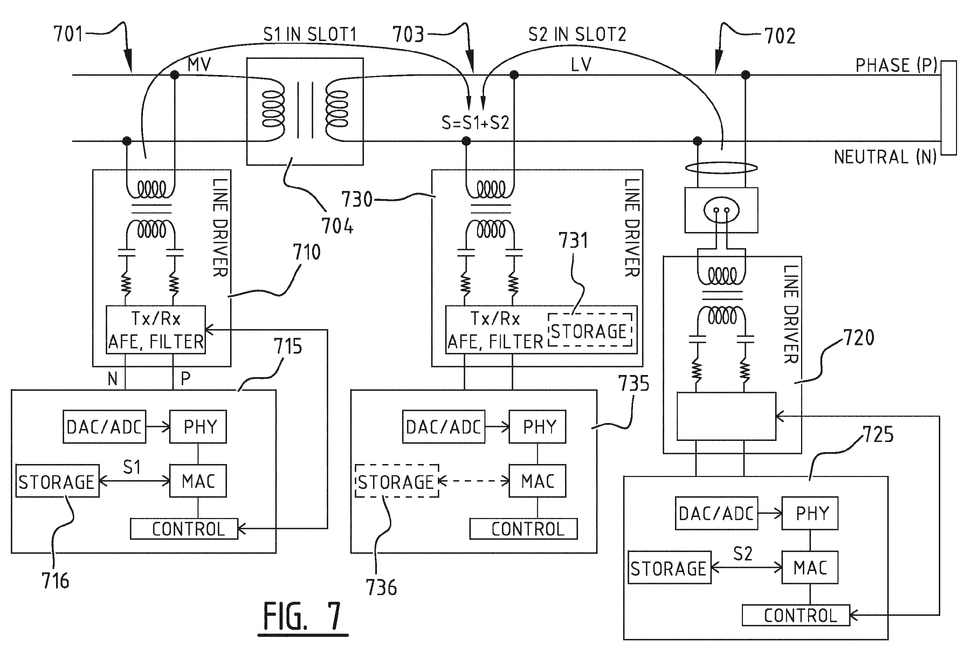

A difference between known signal processing techniques at the physical-layer and embodiments of the present invention is that embodiments of the present invention operate within a single domain of a smart grid network, while prior art techniques typically operate between domains. Further, in embodiments of the present invention additional functions are added to the one or more control centers, the one or more substations and the sensors in order to facilitate enablement of bi-directional relaying with network coding at physical-layer. Embodiments of the invention are useful when a pair of devices can be identified for common data exchange. Naturally, this is the case in most of the smart grid applications. Thus, in embodiments of the invention, the current smart grid communication components are modified to include the physical-layer network coding functionality, see also the exemplary embodiment of figure 7 which is discussed below.

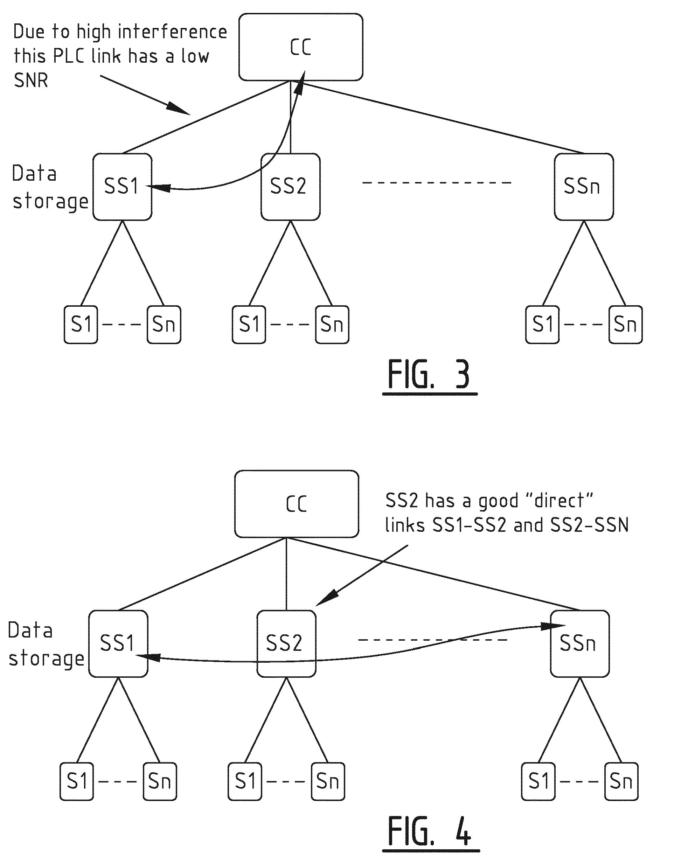

Below three use case scenarios are discussed with reference to figures 3-5.

### Case 1: SS1 is not reachable by CC

A simple application is sending of aggregated data from the substations SS to the control center(s) CC for further processing and analysis, where it is assumed that the analysis is done at CC. In this example it is assumed that substation SS1 needs to establish a bi-directional communication with the control center CC, and that the direct link between SS1 and CC has a low signal-to-noise ration. Thus, SS1 and CC intend to exchange stored data and control messages. When the low link quality of "direct" link between CC and SS1 is observed, SS2 may be involved as relaying device which has a good quality link SS2-CC and SS2-SS1. Thus, CC initiates a bi-directional communication with SS1 via SS2. This scenario is illustrated in figure 3. In embodiments of the invention SS2 may be implemented to perform analog coding as described in figure 2C where device 1 and 2 correspond with CC and SS1.

### Case 2: SSn is not reachable by SS1

To improve robustness and reliability of smart grid applications substations may exchange data messages between themselves from time to time. In figure 4, it is assumed that SS1 and SSn intend to exchange stored data messages. In the illustrated example it is assumed that SSn (or SS1) initiates a bi-directional communication with SS1 (or SSn) to exchange aggregated data message. It is further assumed that substation SS2 is selected as a relay since it has a good quality links SS1-SS2 and SS2-SSn. This scenario is illustrated in figure 4. Also in this embodiment SS2 may be implemented to perform analog coding as described with reference to figure 2C where device 1 and 2 correspond with SSn and SS1.

### Case 3: Sensor S1 is not reachable by sensor Sn

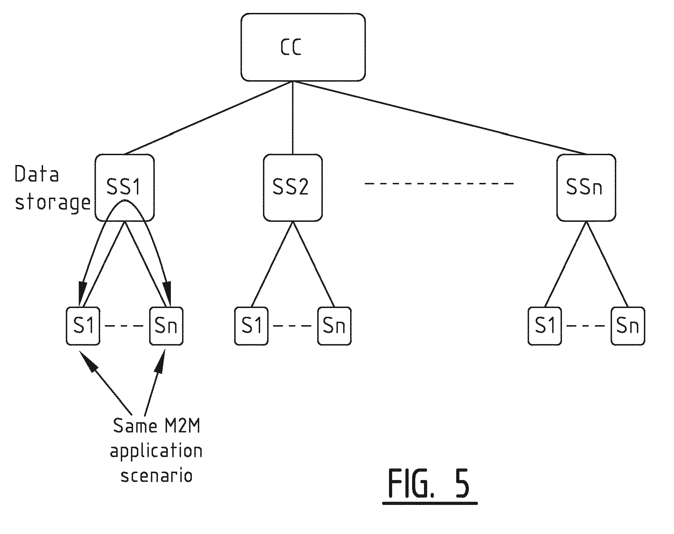

For M2M applications, it is often desirable that a first sensor communicates with a second sensor. In the illustrated example it is assumed that sensor S1 initiates a bi-directional communication with sensor Sn within a smart house application where S1 and Sn are coupled together in one application scenario. A simple application example is security where light and camera sensors are coupled into a single application. They may be triggered by environment conditions to initiate bi-directional communication among each other. This scenario is illustrated in figure 5. In this embodiment SS1 may be implemented to perform analog coding as described with reference to figure 2C where device 1 and 2 correspond with S1 and Sn.

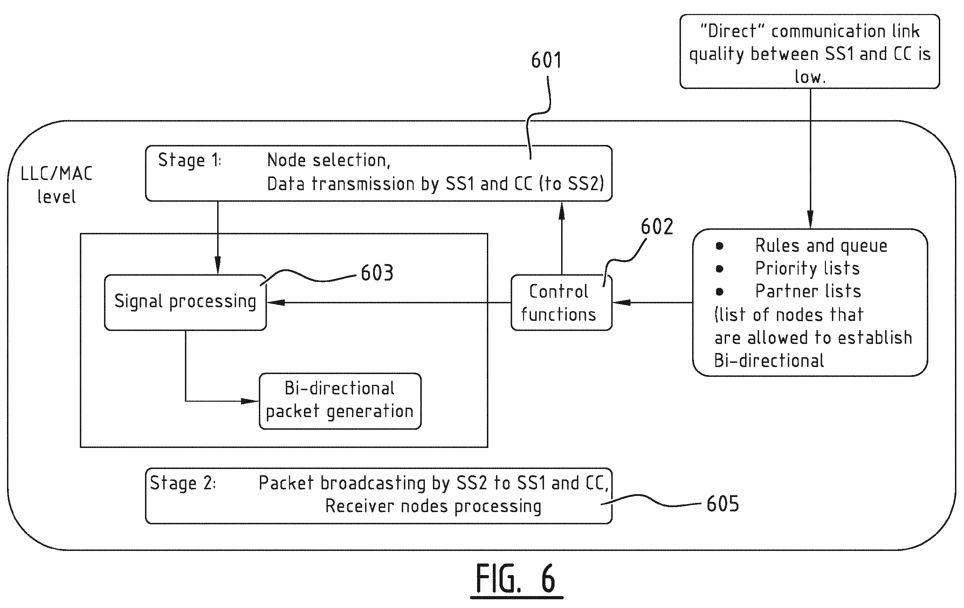

An exemplary embodiment of the proposed data signal flow for case 1, where CC initiates a bi-directional communication with SS1 via SS2, is illustrated in figure 6. The communication is done in three stages within the two signaling intervals as described in figure 2C. In a first step 601 the selection of a relay node is done by a control function module 602 which may be located e.g. in the CC or in one or more substations. The function module 602 may also be used to perform reservation of signaling slots for a pair (SS1, CC) and for the relay node SS2. Then, the communication nodes SS1 and CC transmit their respective data in a first slot. In a second step 602, SS2 process the received signals at the physical layer and generates bi-directional packet(s) for transmission in the second time signaling interval which is allocated to SS2. In a third step 605 the combined packet is broadcasted and both nodes SS1 and CC process the received signal to obtain their partner data information.

The other two use cases can be constructed in the similar fashion by changing the logic and processing to corresponding relaying node SS2 in the case 2 and node SS1 in the case 3.

For wireless embodiment more details about mathematical signal representation can be found in Sachin Katti et al, "Embracing Wireless Interference: Analog Network Coding, SIGCOMM'07, August 27-31, 2007, Kyoto, Japan.

Exemplary embodiments of the invention introduce network coding at the physical layer in smart grid PLC, resulting in an increased robustness and spectral efficiency which are obtained by packet-level network coding for distributed storage systems and wireless sensor networks.

Now a more detailed exemplary embodiment of the invention is illustrated with reference to figure 7. Figure 7 illustrates an example where a first medium voltage (MV) component 701 of a smart grid PLC network wishes to exchange data messages with a second low voltage (LV) component 702 of the smart grid network, wherein the LV section is coupled via a coupler 704 with the MV section. For this exchange a substation component 703 is selected as a relay for bi-directional communication between the first component 701 and the second component 702 of the smart grid network. To that end there may be provided a master node (not illustrated) that controls the bi-directional sending of data messages between the different components. Such a master node may sent a control signal to the substation component 703 to inform it that it has been selected as a relay for bi-directional communication between the first and the second component of the smart grid network, and may further send control signals to the different components 701, 702 and 703 to control the time signaling intervals.

During a first time signaling interval, of a message signal S1 is sent from the first component to the relay 703 and a second message signal S2 is sent from the second component 702 to the relay 703. Hence, during the first time signaling interval, the substation 703 receives a first message signal from the first component 701 and a second message signal from the second component 702. This will result in the generating of a superimposed signal S1+S2 by adding at the physical layer a first physical parameter, e.g. a voltage representing the first message signal and a second physical parameter representing the second message signal. The substation component 703 stores the received signal S1+S2 either as analog data or as digital data. The substation 703 comprises a line driver block 730 (including amongst other an analogue front end AFE, a filter and some coupling circuitry) and a baseband block 735 (including amongst others a DAC, an ADC, and a digital processor). The signal S1+S2 may be stored in a storage means 731 of the line driver block 730, or in a storage means 736 of the baseband block 735. The storage means 731 are typically provided after the filtering means of the line driver block 730. If further signal processing is to be performed on the combined signal S1+S2 before sending it to the first and the second component, the second option may be used.

During a second time signaling interval following the first time signaling interval the superimposed signal S1+S2 is sent to the first and the second component 701, 702. The first component 701 receives the superimposed signal S1+S2 and extracts the message signal S2 using the message signal S1 that was sent to the selected substation component 703 and stored in storage means 716 of a baseband block 715 of the component 701. The extraction may be done at the analog or at the digital level. If the extraction is done at the analog level, an additional storage means (not illustrated) may be provided in a line driver block 710 of the component 701. If the extraction is done in the baseband block 715 the PHY (physical layer) block may convert the digitally stored signal S1 into analog form and extract S2. The steps performed by the first component 701 are performed at the same time, i.e. during the second signaling interval at the second component 702 via line driver block 720 and baseband block 725.

The skilled person will understand that any references to a home network in the present description are strictly exemplary and not intended to limit the scope of application of the present invention to residential settings. The invention is in fact also applicable to other settings in which several network segments are present in an architecture similar to the one implied by G.hn, including office, industry, hospitality, and educational settings. Likewise, references to a "G.hn" network should not be construed as limiting the invention to implementations complying to that particular family of ITU-T Recommendations.

The number of sensors, substations and control centres shown in the figures is chosen for illustrative purposes only, and does not limit the generality of the invention in any way. Operations described in relation to a given substation may apply, mutatis mutandis, to other substations in the network.

Whilst the principles of the invention have been set out above in connection with specific embodiments, it is to be understood that this description is merely made by way of example and not as a limitation of the scope of protection which is determined by the appended claims.

## Claims

1. A method to be performed by a substation component when a first component communicates with a second component of a smart grid network, said smart grid network comprising a plurality of sensor components, a plurality of substation components, and at least one control component, wherein said first and said second component are any component of said plurality of sensor components, said plurality of substation components, and said least one control component, said method comprising at a substation component of said plurality of substation components:
receiving during a first time signaling interval, a first message signal from said first component;
receiving a second message signal from said second component;
combining said first message signal and said second message signal to obtain a combined signal;
sending during a second time signaling interval following said first time signaling interval, of said combined signal or a signal derived from said combined signal to said first and said second component; **characterized in that** said method comprises at said substation component:
receiving information that said substation component has been selected as a relay for bi-directional communication between the first and the second component of the smart grid network;
receiving said second message signal from said second component during said first time signaling interval; and that combining said first message signal and said second message signal to obtain a combined signal comprises:
combining at the physical layer a first physical parameter representing said first message signal and a second physical parameter representing said second message signal.

2. The method of claim 1, wherein said combining comprises generating a superimposed signal by adding the first physical parameter to the second physical parameter.

3. The method of claim 1 or 2, wherein the combined signal is stored in analogue form, and the sending comprises sending the stored combined signal.

4. The method of any one of the claims 1-3, wherein the method further comprises:
converting the combined signal into a digital signal;
storing said digital signal;
digitally processing said digital signal; and
converting said digitally processed digital signal into an analogue signal;
wherein the sending comprises sending said analogue signal.

5. A method to be performed by a component when the component communicates with another component via a substation of a smart grid network, said smart grid network comprising a plurality of sensor components, a plurality of substation components, and at least one control component, said method comprising at said component:
selecting a substation component of said plurality of substation components as a relay for bi-directional communication between the component and the other component of the smart grid network, wherein selecting said substation component comprises providing said substation component with information that said substation component has been selected as a relay to receive during a first time signaling interval a message signal from said component and another message signal from said other component, wherein said component and said other component are any component of said plurality of sensor components, said plurality of substation components, and said least one control component;
sending to said selected substation component, during a first time signaling interval, of said message signal;
receiving from said selected substation component, during a second time signaling interval following said first time signaling interval, of a combined signal obtained by combining at the physical layer a physical parameter representing said message signal and another physical parameter representing said other message signal;
extracting said other message signal from said combined signal, using the message signal that was sent to the selected substation component.

6. A method for communicating between a first component and a second component in a smart grid network, comprising the method of any one of the claim 1-4 performed at the substation, the method of claim 4 performed at the first component, and the method of claim 5 performed at the second component.

7. The method of claim 6, wherein said first and said second component are a first and a second substation component of said plurality of substation components; or
wherein said first component is a sensor component of said plurality of sensor components and said second component is a control component; or
wherein said first and second component are a first and second sensor component of said plurality of sensor components.

8. Substation component for use in a smart grid network, said smart grid network comprising a plurality of sensor components, a plurality of substation components, and at least one control component, said substation component being configured for:
receiving information that said substation component has been selected as a relay for bi-directional communication between a first and a second component of the smart grid network, wherein said first and said second component are any component of said plurality of sensor components, said plurality of substation components, and said least one control component;
receiving during a first time signaling interval, of a first message signal from said first component and a second message signal from said second component;
combining at the physical layer a first physical parameter representing said first message signal and a second physical parameter representing said second message signal to obtain a combined signal;
sending during a second time signaling interval following said first time signaling interval, of said combined signal or a signal derived from said combined signal to said first and said second component.

9. The substation component of claim 7, further configured for generating a superimposed signal by adding the first physical parameter to the second physical parameter.

10. The substation of claim 8 or 9, comprising a storage means for storing the combined signal in analogue form, and a sending module configured for sending the stored combined signal.

11. The substation of any one of the claims 8-10, comprising:
an analogue to digital converter configured for converting the combined signal into a digital signal;
storage means for storing said digital signal;
a digital processor configured for digitally processing said digital signal;
a digital to analogue converter for converting said digitally processed digital signal into an analogue signal; and
a sending module configured for sending said analogue signal.

12. Component for use in a smart grid network comprising a plurality of sensor components, a plurality of substation components, and at least one control component, said component being configured for:
selecting a substation component of said plurality of substation components as a relay for bi-directional communication with another component of the smart grid network, wherein selecting said substation component comprises providing said substation component with information that said substation component has been selected as a relay to receive during a first time signaling interval a message signal from said component and another message signal from said other component, wherein said component and said other component are any component of said plurality of sensor components, said plurality of substation components, and said least one control component;
sending to said selected substation component, during a first time signaling interval, of said message signal;
receiving from said selected substation component, during a second time signaling interval following said first time signaling interval, of a combined signal generated by combining at the physical layer a physical parameter representing said message signal and another physical parameter representing said other message signal;
extracting said other message signal from said combined signal, using the message signal that was sent to the selected substation.

13. The component of claim 12, wherein the component is a sensor component, a substation component or a control component.

14. Smart grid network comprising a plurality of sensor components according to claim 12, a plurality of substation components according to any one of the claims 8-11, and at least one control component according to claim 12.

## Patentansprüche

1. Von einer Komponente einer Unterstation auszuführendes Verfahren, wenn eine erste Komponente mit einer zweiten Komponente eines intelligenten Gitternetzes kommuniziert, wobei besagtes intelligentes Gitternetz eine Vielzahl von Sensorkomponenten, eine Vielzahl von Unterstationkomponenten und mindestens eine Steuerungskomponente umfasst, wobei besagte erste und besagte zweite Komponente beliebige Komponenten aus besagter Vielzahl von Sensorkomponenten, besagter Vielzahl von Unterstationkomponenten und der besagten, mindestens einen Steuerungskomponente sind, wobei besagtes Verfahren an einer Unterstationkomponente aus besagter Vielzahl von Unterstationkomponenten Folgendes umfasst:
während eines ersten Zeitsignalisierungsintervalls den Empfang eines ersten Mitteilungssignals von besagter erster Komponente;
den Empfang eines zweiten Mitteilungssignals von besagter zweiter Komponente;
das Kombinieren besagten ersten Mitteilungssignals und besagten zweiten Mitteilungssignals zwecks Erhalts eines kombinierten Signals;
das im Verlauf des zweiten, auf das erste Zeitsignalisierungsintervall folgenden Zeitsignalisierungsintervalls erfolgende Senden besagten kombinierten Signals oder eines von besagtem kombiniertem Signal abgeleiteten Signals an besagte zweite Komponente; **dadurch gekennzeichnet, dass** besagtes Verfahren an besagter Unterstationkomponente umfasst:
den Empfang der Information, dass besagte Unterstationkomponente als Relais für die bidirektionale Kommunikation zwischen der ersten und der zweiten Komponente des intelligenten Gitternetzes ausgewählt wurde;
den Empfang besagten zweiten Mitteilungssignals von besagter zweiter Komponente während besagten ersten Zeitsignalisierungsintervalls; sowie **dadurch gekennzeichnet, dass** das Kombinieren besagten ersten Mitteilungssignals und besagten zweiten Mitteilungssignals zwecks Erhalts eines kombinierten Signals umfasst:
das Kombinieren auf physischer Schicht eines ersten, besagtes erstes Mitteilungssignal repräsentierenden, physischen Parameters mit einem zweiten, besagtes zweites Mitteilungssignal repräsentierenden, physischen Parameters.

2. Das Verfahren nach Anspruch 1, wobei besagtes Kombinieren das Generieren eines überlagerten Signals anhand des Hinzufügens des ersten physischen Parameters zu dem zweiten physischen Parameter umfasst.

3. Das Verfahren nach Anspruch 1 oder 2, wobei das kombinierte Signal analog gespeichert wird und das Senden das Senden des gespeicherten kombinierten Signals umfasst.

4. Verfahren nach Anspruch 1 bis 3, wobei das Verfahren weiterhin umfasst:
das Umwandeln des kombinierten Signals in ein digitales Signal;
das Speichern besagten digitalen Signals;
das digitale Verarbeiten besagten digitalen Signals; und
das Umwandeln des besagten, digital verarbeiteten, digitalen Signals in ein analoges Signal;
wobei das Senden das senden besagten analogen Signals umfasst.

5. Von einer Komponente dann auszuführendes Verfahren, wenn die Komponente über eine Unterstation eines intelligenten Gitternetzes mit einer anderen Komponente kommuniziert, wobei besagtes intelligentes Gitternetz eine Vielzahl von Sensorkomponenten, eine Vielzahl von Unterstationkomponenten und mindestens eine Steuerungskomponente umfasst, wobei besagtes Verfahren an besagter Komponente Folgendes umfasst:
die Auswahl einer Unterstationkomponente aus besagter Vielzahl von Unterstationkomponenten als Relais für die bidirektionale Kommunikation zwischen der Komponente und der anderen Komponente des intelligenten Gitternetzes, wobei das Auswählen besagter Unterstationkomponente umfasst, besagte Unterstationkomponente mit der Information auszustatten, dass besagte Unterstationkomponente als Relais für den während eines ersten Zeitsignalisierungsintervalls erfolgenden Empfang eines Mitteilungssignals von besagter Komponente und eines weiteren Mitteilungssignals von besagter anderer Komponente ausgewählt wurde, wobei besagte Komponente und besagte andere Komponente beliebige Komponenten aus besagter Vielzahl von Sensorkomponenten, besagter Vielzahl von Unterstationkomponenten und der mindestens einen Steuerungskomponente sind;
das Senden besagten Mitteilungssignals während eines ersten Zeitsignalisierungsintervalls an besagte Unterstationkomponente;
den im Verlauf des zweiten, auf das erste Zeitsignalisierungsintervall folgenden Zeitsignalisierungsintervalls erfolgenden Empfang eines kombinierten Signals von besagter ausgewählter Unterstationkomponente, welches durch das Kombinieren auf physischer Schicht eines besagtes erstes Mitteilungssignal repräsentierenden, physischen Parameters mit einem weiteren, besagtes andere Mitteilungssignal repräsentierenden, physischen Parameters erhalten wurde;
das Auslesen besagten anderen Mitteilungssignals aus besagtem kombiniertem Mitteilungssignal unter Verwendung des Mitteilungssignals, welches an die ausgewählte Unterstationkomponente gesendet wurde.

6. Verfahren zur Kommunikation zwischen einer ersten Komponente und einer zweiten Komponente in einem intelligenten Gitternetz, das in der Unterstation ausgeführte Verfahren nach einem jeglichen der Ansprüche 1 bis 4 umfassend, wobei das Verfahren nach Anspruch 4 in der ersten Komponente und das Verfahren nach Anspruch 5 in der zweiten Komponente ausgeführt wird.

7. Das Verfahren nach Anspruch 6, wobei besagte erste und besagte zweite Komponente eine erste und eine zweite Unterstationkomponente aus besagter Vielzahl von Unterstationkomponenten sind; oder
wobei besagte erste Komponente eine Sensorkomponenten aus besagter Vielzahl von Sensorkomponenten und besagte zweite Komponente eine Steuerungskomponente ist; oder
wobei besagte erste und zweite Komponente eine erste und zweite Sensorkomponenten aus besagter Vielzahl von Sensorkomponenten sind.

8. Unterstationkomponente zur Verwendung in einem intelligenten Gitternetz, wobei besagtes intelligentes Gitternetz eine Vielzahl von Sensorkomponenten, eine Vielzahl von Unterstationkomponenten und mindestens eine Steuerungskomponente umfasst, wobei besagte Unterstationkomponente konfiguriert ist für:
den Empfang der Information, dass besagte Unterstationkomponenten als Relais für die bidirektionale Kommunikation zwischen einer ersten und einer zweiten Komponente des intelligenten Gitternetzes ausgewählt wurde, wobei besagte erste und besagte zweite Komponente jeweils beliebige Komponenten aus besagter Vielzahl von Sensorkomponenten, besagter Vielzahl von Unterstationkomponenten und der besagten, mindestens einen Steuerungskomponente sind;
den während eines ersten Zeitsignalisierungsintervalls erfolgenden Empfang eines ersten Mitteilungssignals von besagter erster Komponente und eines zweiten Mitteilungssignals von besagter zweiter Komponente;
das Kombinieren auf physischer Schicht eines ersten, besagtes erstes Mitteilungssignal repräsentierenden, physischen Parameters mit einem zweiten, besagtes zweites Mitteilungssignal repräsentierenden, physischen Parameters, um ein kombiniertes Signal zu erhalten.
das im Verlauf des zweiten, auf das erste Zeitsignalisierungsintervall folgenden Zeitsignalisierungsintervalls erfolgende Senden besagten kombinierten Signals oder eines von besagtem kombiniertem Signal abgeleiteten Signals an besagte zweite Komponente.

9. Die Unterstation nach Anspruch 7, weiterhin konfiguriert für das Generieren eines überlagerten Signals anhand des Hinzufügens des ersten physischen Parameters zu dem zweiten physischen Parameter.

10. Die Unterstation nach Anspruch 8 oder 9, ein Speichermittel für das Speichern des kombinierten Signals in analoger Form und ein Sendemodul umfassend, welches konfiguriert ist für das Senden des gespeicherten, kombinierten Signals.

11. Die Unterstation nach einem beliebigen der Ansprüche 8 bis 10, umfassend:
einen Analog-Digital-Wandler, der konfiguriert ist für das Umwandeln des kombinierten Signals in ein digitales Signal;
Speichermittel für das Speichern besagten digitalen Signals;
einen digitalen Prozessor, der konfiguriert ist für das digitale Verarbeiten besagten digitalen Signals;
einen Digital-Analog-Wandler für das Umwandeln besagten digital verarbeiteten, digitalen Signals in ein analoges Signal; und
ein Sendemodul, das konfiguriert ist für das Senden besagten analogen Signals.

12. Komponente zur Verwendung in einem intelligenten Gitternetz, das eine Vielzahl von Sensorkomponenten, eine Vielzahl von Unterstationkomponenten und mindestens eine Steuerungskomponente umfasst, wobei besagte Komponente konfiguriert ist für:
die Auswahl einer Unterstationkomponente aus besagter Vielzahl von Unterstationkomponenten als Relais für die bidirektionale Kommunikation mit einer anderen Komponente des intelligenten Gitternetzes, wobei das Auswählen besagter Unterstationkomponente umfasst, besagte Unterstationkomponente mit der Information auszustatten, dass besagte Unterstationkomponente als Relais für den während eines ersten Zeitsignalisierungsintervalls erfolgenden Empfang eines Mitteilungssignals von besagter Komponente und eines weiteren Mitteilungssignals von besagter anderer Komponente ausgewählt wurde, wobei besagte Komponente und besagte andere Komponente beliebige Komponenten aus besagter Vielzahl von Sensorkomponenten, besagter Vielzahl von Unterstationkomponenten und der mindestens einen Steuerungskomponente sind;
das Senden besagten Mitteilungssignals während eines ersten Zeitsignalisierungsintervalls an besagte Unterstationkomponente;
den im Verlauf des zweiten, auf das erste Zeitsignalisierungsintervall folgenden Zeitsignalisierungsintervalls erfolgenden Empfang eines kombinierten Signals von besagter ausgewählter Unterstationkomponente, welches durch das Kombinieren auf physischer Schicht eines besagtes erstes Mitteilungssignal repräsentierenden, physischen Parameters mit einem weiteren, besagtes andere Mitteilungssignal repräsentierenden, physischen Parameters generiert wurde;
das Auslesen besagten anderen Mitteilungssignals aus besagtem kombiniertem Mitteilungssignal unter Verwendung des Mitteilungssignals, welches an die ausgewählte Unterstation gesendet wurde.

13. Die Komponente nach Anspruch 12, wobei die Komponente eine Sensorkomponente, eine Unterstationkomponente oder eine Steuerungskomponente ist.

14. Intelligentes Gitternetz, eine Vielzahl von Sensorkomponenten nach Anspruch 12, eine Vielzahl von Unterstationkomponenten nach einem jeglichen der Ansprüche 8 bis 11 und mindestens eine Steuerungskomponente nach Anspruch 12 umfassend.

## Revendications

1. Procédé devant être exécuté par un composant de sous-station lorsqu'un premier composant communique avec un deuxième composant d'un réseau en grille intelligent, ledit réseau en grille intelligent comprenant une pluralité de composants de détection, une pluralité de composants de sous-station, et au moins un composant de commande, dans lequel lesdits premier et deuxième composants sont un quelconque composant parmi ladite pluralité de composants de détection, ladite pluralité de composants de sous-station, et ledit au moins un composant de commande, ledit procédé comprenant au niveau d'un composant de sous-station parmi ladite pluralité de composants de sous-station les étapes suivantes :
recevoir durant un premier intervalle temporel de signalisation, un premier signal de message provenant dudit premier composant ;
recevoir un deuxième signal de message provenant dudit deuxième composant ;
combiner ledit premier signal de message et ledit deuxième signal de message pour obtenir un signal combiné ;
envoyer durant un deuxième intervalle temporel de signalisation suite audit premier intervalle temporel de signalisation, ledit signal combiné ou un signal issu dudit signal combiné auxdits premier et deuxième composants ; **caractérisé en ce que** ledit procédé comprend au niveau dudit composant de sous-station les étapes suivantes :
recevoir des informations selon lesquelles ledit composant de sous-station a été sélectionné en tant que relais pour la communication bidirectionnelle entre le premier et le deuxième composants du réseau en grille intelligent ;
recevoir ledit deuxième signal de message provenant dudit deuxième composant durant ledit premier intervalle temporel de signalisation ; et **en ce que** la combinaison dudit premier signal de message et dudit deuxième signal de message pour obtenir un signal combiné comprend l'étape suivante :
combiner au niveau de la couche physique un premier paramètre physique représentant ledit premier signal de message et un deuxième paramètre physique représentant ledit deuxième signal de message.

2. Procédé selon la revendication 1, dans lequel ladite combinaison comprend la génération d'un signal superposé en ajoutant le premier paramètre physique au deuxième paramètre physique.

3. Procédé selon la revendication 1 ou 2, dans lequel le signal combiné est stocké sous forme analogique, et l'envoi comprend l'envoi du signal combiné stocké.

4. Procédé selon l'une quelconque des revendications 1 à 3, dans lequel le procédé comprend en outre les étapes suivantes :
convertir le signal combiné en un signal numérique ;
stocker ledit signal numérique ;
traiter numériquement ledit signal numérique ; et
convertir ledit signal numérique traité numériquement en un signal analogique ;
dans lequel l'envoi comprend l'envoi dudit signal analogique.

5. Procédé devant être exécuté par un composant lorsque le composant communique avec un autre composant par l'intermédiaire d'une sous-station d'un réseau en grille intelligent, ledit réseau en grille intelligent comprenant une pluralité de composants de détection, une pluralité de composants de sous-station et au moins un composant de commande, ledit composant comprenant au niveau dudit composant les étapes suivantes :
sélectionner un composant de sous-station parmi ladite pluralité de composants de sous-station en tant que relais pour une communication bidirectionnelle entre le composant et l'autre composant du réseau en grille intelligent, dans lequel la sélection dudit composant de sous-station consiste à fournir audit composant de sous-station des informations selon lesquelles ledit composant de sous-station a été sélectionné en tant que relais pour recevoir durant un premier intervalle temporel de signalisation un signal de message provenant dudit composant et un autre signal de message provenant dudit autre composant, dans lequel ledit composant et ledit autre composant sont un quelconque composant parmi ladite pluralité de composants de détection, ladite pluralité de composants de sous-station, et ledit au moins un composant de commande ;
envoyer audit composant de sous-station sélectionné, durant un premier intervalle temporel de signalisation, ledit signal de message ;
recevoir à partir dudit composant de sous-station sélectionné, durant un deuxième intervalle temporel de signalisation suite audit premier intervalle temporel de signalisation, un signal combiné obtenu en combinant au niveau de la couche physique un paramètre physique représentant ledit signal de message et un autre paramètre physique représentant ledit autre signal de message ;
extraire ledit autre signal de message dudit signal combiné, en utilisant le signal de message qui a été envoyé au composant de sous-station sélectionné.

6. Procédé pour communiquer entre un premier composant et un deuxième composant dans un réseau en grille intelligent, comprenant le procédé selon l'une quelconque des revendications 1 à 4 exécuté au niveau de la sous-station, le procédé selon la revendication 4 exécuté au niveau du premier composant, et le procédé selon la revendication 5 exécuté au niveau du deuxième composant.

7. Procédé selon la revendication 6, dans lequel ledit premier et ledit deuxième composants sont un premier et un deuxième composants de sous-station parmi ladite pluralité de composants de sous-station ; ou
dans lequel ledit premier composant est un composant de détection parmi ladite pluralité de composants de détection et ledit deuxième composant est un composant de commande ; ou
dans lequel lesdits premier et deuxième composants sont un premier et un deuxième composants de détection parmi ladite pluralité de composants de détection.

8. Composant de sous-station destiné à être utilisé dans un réseau en grille intelligent, ledit réseau en grille intelligent comprenant une pluralité de composants de détection, une pluralité de composants de sous-station, et au moins un composant de commande, ledit composant de sous-station étant configuré pour :
recevoir des informations selon lesquelles ledit composant de sous-station a été sélectionné en tant que relais pour une communication bidirectionnelle entre un premier et un deuxième composants du réseau en grille intelligent, dans lequel ledit premier et ledit deuxième composants sont un quelconque composant parmi ladite pluralité de composants de détection, ladite pluralité de composants de sous-station, et ledit au moins un composant de commande ;
recevoir durant un premier intervalle temporel de signalisation, un premier signal de message provenant dudit premier composant et un deuxième signal de message provenant dudit deuxième composant ;
combiner au niveau de la couche physique un premier paramètre physique représentant ledit premier signal de message et un deuxième paramètre physique représentant ledit deuxième signal de message pour obtenir un signal combiné ;
envoyer durant un deuxième intervalle temporel de signalisation suite audit premier intervalle temporel de signalisation, ledit signal combiné ou un signal issu dudit signal combiné auxdits premier et deuxième composants.

9. Composant de sous-station selon la revendication 7, configuré en outre pour générer un signal superposé en ajoutant le premier paramètre physique au deuxième paramètre physique.

10. Sous-station selon la revendication 8 ou 9, comprenant des moyens de stockage pour stocker le signal combiné sous forme analogique, et un module d'envoi configuré pour envoyer le signal combiné stocké.

11. Sous-station selon l'une quelconque des revendications 8 à 10, comprenant :
un convertisseur analogique/numérique configuré pour convertir le signal combiné en un signal numérique ;
des moyens de stockage pour stocker ledit signal numérique ;
un processeur numérique configuré pour traiter numériquement ledit signal numérique ;
un convertisseur numérique/analogique pour convertir ledit signal numérique traité numériquement en un signal analogique ; et
un module d'envoi configuré pour envoyer ledit signal analogique.

12. Composant destiné à être utilisé dans un réseau en grille intelligent comprenant une pluralité de composants de détection, une pluralité de composants de sous-station, et au moins un composant de commande, ledit composant étant configuré pour :
sélectionner un composant de sous-station parmi ladite pluralité de composants de sous-station en tant que relais pour une communication bidirectionnelle avec un autre composant du réseau en grille intelligent, dans lequel la sélection dudit composant de sous-station consiste à fournir audit composant de sous-station des informations selon lesquelles ledit composant de sous-station a été sélectionné en tant que relais pour recevoir durant un premier intervalle temporel de signalisation un signal de message provenant dudit composant et un autre signal de message provenant dudit autre composant, dans lequel ledit composant et ledit autre composant sont un quelconque composant parmi ladite pluralité de composants de détection, ladite pluralité de composants de sous-station, et ledit au moins un composant de commande ;
envoyer audit composant de sous-station sélectionné, durant un premier intervalle temporel de signalisation, ledit signal de message ;
recevoir à partir dudit composant de sous-station sélectionné, durant un deuxième intervalle temporel de signalisation suite audit premier intervalle temporel de signalisation, un signal combiné généré en combinant au niveau de la couche physique un paramètre physique représentant ledit signal de message et un autre paramètre physique représentant ledit autre signal de message ;
extraire ledit autre signal de message dudit signal combiné, en utilisant le signal de message qui a été envoyé à la sous-station sélectionnée.

13. Composant selon la revendication 12, dans lequel le composant est un composant de détection, un composant de sous-station ou un composant de commande.

14. Réseau en grille intelligent comprenant une pluralité de composants de détection selon la revendication 12, une pluralité de composants de sous-station selon l'une quelconque des revendications 8 à 11, et au moins un composant de commande selon la revendication 12.
